(19) Europäisches Patentamt
European Patent Office
Office européen des brevets

(11) **EP 1 333 677 A1**

(12) **EUROPEAN PATENT APPLICATION**

(43) Date of publication:
**06.08.2003 Bulletin 2003/32**

(51) Int Cl.[7]: **H04N 7/18**, G08B 13/196

(21) Application number: **02250675.2**

(22) Date of filing: **31.01.2002**

| | |
|---|---|
| (84) Designated Contracting States: **AT BE CH CY DE DK ES FI FR GB GR IE IT LI LU MC NL PT SE TR** Designated Extension States: **AL LT LV MK RO SI** (71) Applicant: **BRITISH TELECOMMUNICATIONS public limited company London EC1A 7AJ (GB)** | (72) Inventor: **The designation of the inventor has not yet been filed** (74) Representative: **Roberts, Simon Christopher et al BT Group Legal Services, Intellectual Property Department, 8th Floor, Holborn Centre 120 Holborn London, EC1N 2TE (GB)** |

(54) **Video coding**

(57) A method of generating video data for transmission to a user particularly for use in a video surveillance system. The method comprises generating a first representation of a first image and one or more further representations of the first image are then generated, said further representation(s) being predicted from a previously generated representation of the first image. In response to a request for a subsequent image, a first representation of said subsequent image is generated, said first representation of said subsequent image being predicted from a representation of the first image. Then one or more further representations of said subsequent image are generated, said further representations of said subsequent image being predicted from a previously generated representation of said subsequent image. Thus, the same source data for a first image is fed into the encoder, so producing a progressive still image at the decoder. When a different image is required, the encoder substitutes, as the input to the encoder, the source picture from the requested point in time. This source picture is encoded predictively from the original image.

Fig 3

EP 1 333 677 A1

## EP 1 333 677 A1

**Description**

This invention relates to video surveillance and in particular to a system for monitoring a video surveillance system.

A video sequence simply consists of a series of still pictures or frames. Digital video compression methods are based on reducing the redundant and perceptually irrelevant parts of video sequences. The redundancy in video sequences can be categorised in three types: spectral, spatial and temporal redundancies. Spectral redundancy refers to the similarity between the different colour components of the same picture. Spatial redundancy results from the similarity between neighbouring pixels in the picture. Temporal redundancy exists because objects appearing in the previous image are also likely to appear in the current image. Compression can therefore be achieved by taking advantage of this temporal redundancy and predicting the current picture from another picture, referred to as an anchor or reference picture. Further compression may be achieved by generating motion compensation data that describes the displacement between areas of the current picture and similar areas of the previous picture. The differences between the identified area of the previous picture and the current picture are then encoded.

Video coders may also try to reduce the quality of those parts of the video sequence which are subjectively less important. In addition, the redundancy of the encoded bit stream may be reduced by means of efficient lossless coding of compression parameters and co-efficients. The main technique is to use variable length codes.

Video compression methods typically differentiate between pictures that utilise temporal redundancy reduction and those that do not. Compressed pictures that do not use temporal redundancy reduction methods are usually called INTRA or I-FRAMES or I-PICTURES. Temporally predicted images are usually forwardly predicted from a picture occurring before the current picture and are called INTER or P-FRAMES. In the INTER FRAME case, the current picture is predicted from a reference picture, usually using a motion compensation technique, so generating prediction error data representing the difference between the two frames.

In low bit-rate situations, it is usual for a compressed video sequence to consist of a sequence of pictures starting with a temporally independent intra picture followed by temporally differentially coded inter pictures encoded, directly or indirectly, from the intra picture. Since the compression efficiency in intra pictures is normally lower than in inter pictures, intra pictures are used sparingly especially in low bit-rate applications.

Current video coding standards define a syntax for a self-sufficient video bit-stream. The most popular standards at the time of writing are ITU-T Recommendation H.263, "Video coding for low bit rate communication", February 1998; ISO/IEC 14496-2, "Generic Coding of Audio-Visual Objects. Part 2: Visual", 1999 (known as MPEG-4); and ITU-T Recommendation H.262 (ISO/IEC 13818-2) (known as MPEG-2). These standards define a hierarchy for bit-streams and correspondingly for image sequences and images.

In a typical video surveillance system a plurality of cameras are located within an area to be surveyed and the signals from the cameras transmitted back to a central unit for further processing. This further processing may simply be a person watching a representation of the video signal on a display and looking out for particular events e. g. intruders, strange vehicles, vandalism etc. It is becoming more common for this further processing for detection of abnormalities to be done in an automated manner using digital signal processing and, when an abnormality is detected by the system, to then generate an alarm. Human invention is then used to examine the video picture to determine whether the alarm is an alarm that should be acted on or whether it is a false alarm.

The sending of video data to a display may be done by sending a real-time video signal to a remote user or by sending one or more still images to the user.

Neither of these implementations gives suitable information at very low data rates: in the former case, the quality of the video may be so low as to be useless; and, in the latter case, whilst the still image can be progressively refined (for instance, in the same way as a known progressive JPEG image (see ISO/IEC 15444-1 known as JPEG2000)), it may not represent the correct time-frame for the end-user to decide how to act on the alarm. Of course, another still image may be requested, but this requires extra time to encode and download, which may reduce the effectiveness of any decisions that may be made. Crucially, subsequent still images will have the same progressive nature i.e. they will start off at poor quality, and then get better with time.

In accordance with the invention there is provided a method of generating video data for transmission to a user comprising:

generating a first representation of a first image,
generating one or more further representations of the first image, said one or more further representations being predicted from a previously generated representation of the first image,
in response to a request for a subsequent image, generating a first representation of said subsequent image, said first representation of said subsequent image being predicted from a representation of the first image, and
generating one or more further representations of said subsequent image, said one or more further representations of said subsequent image being predicted from a previously generated representation of said subsequent image.

In the context of the invention, the subsequent image may occur temporally before or after the first image. It is merely viewed subsequent to the first image. Thus, the sending application continually feeds the same source picture into the encoder; the net effect is that the end-user receives something that looks like a progressive still image. When the end-user wants to view a still image from another point in time, the sending application substitutes, as the input to the encoder, the source picture from the requested point in time. The encoder encodes this source picture predictively from the original source image. This means that the quality of the new "still" image decoded by the requested decoder will appear to be similar to that reached with the "progressive still" of the previous view. This is because the encoder predicts the new source image from the original source image and hence exploits redundancies between the new and the original source image (e.g. the same background). The two requested stills are likely to be temporally quite close together and to have a large proportion of common imagery. If not, then the encoder may implicitly compress the new still as an Intra frame, which gives performance no worse than compressing as in the prior art, i.e. with JPEG2000 or similar.

In a further aspect of the invention there is provided a method of encoding video data for transmission, comprising:

encoding a first representation of a first image,
encoding one or more further representations of the first image, said one or more further representations being predicted from a previously generated representation of the first image,
in response to a request for a subsequent image, encoding a first representation of said subsequent image, said first representation of said subsequent image being predicted from a representation of the first image, and
encoding one or more further representations of said subsequent image, said one or more further representations of said subsequent image being predicted from a previously generated representation of said subsequent image.

Preferably each further representation of an image is predicted from a previously generated representation which immediately precedes the further representation being generated.

The image data may be stored in a buffer for encoding on request of a user. Alternatively the image data may be presented to the encoder in real-time.

The request for a subsequent image may represent a pre-determined time before or after the first image. Alternatively the point in time requested may be selected by the user.

According to a further aspect of the invention there is provided a video surveillance system comprising:

a video capture device;
a video encoding device for encoding video signals received from the video capture device;
an alarm generator;
a control device for sending video from the video encoding device to an end user in response to an alarm generated by the alarm generator;
an end-user terminal including a video decoding device for decoding video signals received from the video encoding device and a user interface for a user to input commands to be sent to the video encoding device;
the video encoding device being arranged to encode a first image and to encode one or more further representations of the first image, said one or more further representations being predicted from a previously generated representation of the first image,
in response to a request from an end-user for a subsequent image, to generate a first representation of said subsequent image, said first representation of said subsequent image being predicted from a representation of the first image, and
to generate one or more further representations of said subsequent image, said one or more further representations of said subsequent image being predicted from a previously generated representation of said subsequent image.

Preferably the system further includes a buffer for storing images for encoding on request of a user. The control device may be located remotely from the video capture device and/or the video encoding device and/or the alarm generator.

In a further aspect of the invention there is provided a method of decoding video data, comprising:

receiving a first frame of data representing a first image;
decoding the first frame of data to generate a decoded version of a first image,
decoding further received frames of data with reference to a previously decoded version of the first image,
sending a request to a transmitting encoder identifying a subsequent image of interest to a user,
decoding a frame of data representing said requested subsequent image with reference to a previously decoded version of the first image to generate a representation of the subsequent image from the previously encoded version of the first image, and
decoding further frames of data with reference to a previously decoded version of the subsequent image.

Preferably a user interface is provided that includes the presentation of reduced-size views of images occurring before and after the first image, the detection of the selection by a user of one of the reduced-size images, said selection by a user corresponding to the request for a subsequent image, and the sending of a message indicating the selection by the user.
Thus the invention also allows for the presentation to the end-user, in an intuitive manner, of options for selecting which time-frame the next still image should represent. Preferably the system may deliver "thumb-nail" images, which represent a fixed time before and after the main image. The end-user can then select a time period with some confidence that he can make a suitable decision.

The invention also relates to video encoding apparatus comprising:

an input for receiving a frame of data to be encoded, a predictive encoder and a control device for controlling the operation of the encoding apparatus,

wherein the predictive encoder is arranged:

to encode a first frame of data representing a first image,
to encode one or more further representations of the first image, said one or more further representations being predicted from a previously generated representation of the first image,
in response to a request for a subsequent image, to encode a first representation of said subsequent image, said first representation of said subsequent image being predicted from a representation of the first image, and
to encode one or more further representations of said subsequent image, said one or more further representations of said subsequent image being predicted from a previously generated representation of said subsequent image.

When the apparatus includes a motion estimation device, preferably the motion estimation device is disabled when the encoder is encoding further representations of an image.

The invention will now be described, by way of example only, with reference to the accompanying drawings, in which:

Figure 1 shows a video surveillance system according to the invention;
Figure 2 shows an example of the multimedia components of a video surveillance terminal according to the invention;
Figure 3 shows an example of a video encoder incorporating the invention;
Figure 4 shows an example of the multimedia components of an end-user terminal according to the invention;
Figure 5 shows an example of a video decoder for use with the invention;
Figure 6 shows an example of the picture feed thread suitable for use in the invention; and
Figure 7 shows an example of a user interface for use in the invention.

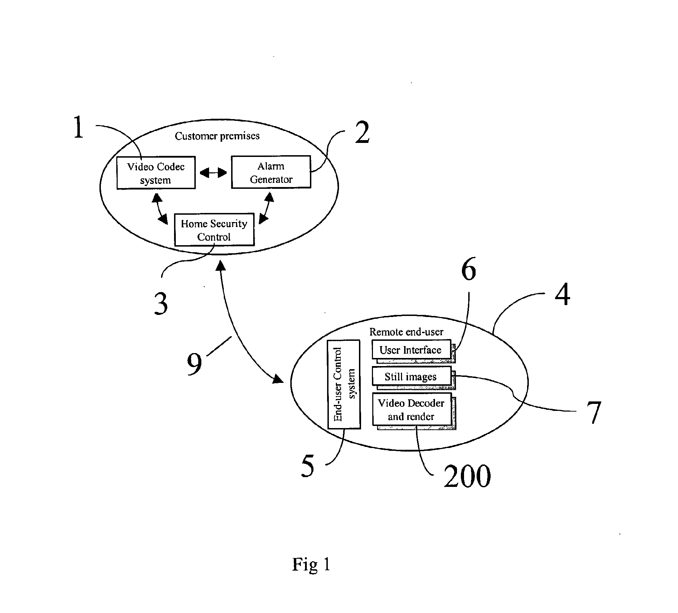

An overview of a networked video surveillance system is shown in figure 1. At the customer premises, there is a video surveillance terminal 1, an alarm generator 2 and a home security control system 3. Video content is transmitted to a remote end-user terminal 4, either as a result of an alarm or when the end-user requests information.

The terminal 1 incorporates a camera to capture images of an area. The terminal 1 may also include other components, e.g. a microphone to record the audio environment around the terminal and other data components as required. The video surveillance terminal 1 includes a video codec system as will be described further below to compress the video images captured by the video surveillance terminal 1.

The alarm generator 2 may be a standard alarm system based on door sensors, infrared detectors or the like, or it may be based on scene analysis. The embodiment described here assumes that the alarm system informs either the user directly, or the home security control 3, that an alarm state has been entered. This will cause, either directly or indirectly, visual material to be transmitted to the end-user terminal 4.

The home security control module 3 is a component the functionality of which is dependant on implementation. The security control module may be located at the same premises as the video surveillance terminal 1 or it may be located remotely and oversee a plurality of alarm generators 2 and associated video surveillance terminals 1. For instance, the home security control system 3 may be used to collate information from a plurality of surveillance terminals 1 and to send video data to a pre-determined remote user terminal 4 when an alarm is generated. Thus if an alarm system 2 sends a signal to the home security control system 3 that there is an alarm situation, the home security control system 3 then sends a representation of the video signal from the appropriate surveillance terminal 1 to the appropriate end user terminal 4.

The remote end-user terminal 4 comprises an end-user control system 5, a user interface 6, a still image store 7 and a video decoder 200.

The communication link 9 between the remote user terminal 4 and the home security control module 3 is likely to be a low bit-rate network e.g. a Public Switched Telephone Network (PSTN) or a Mobile network.

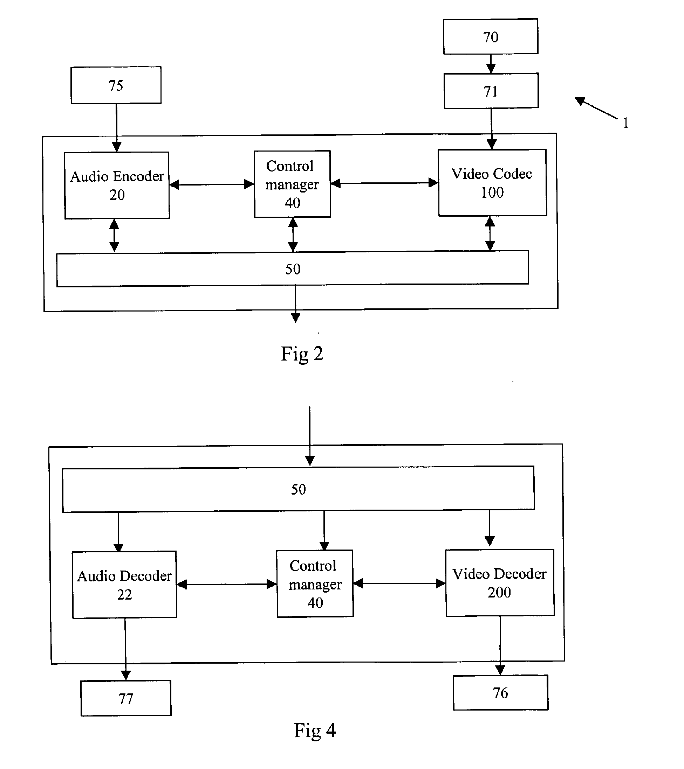

Figure 2 shows the typical multimedia components of the surveillance terminal 1: a video encoder 100, an audio encoder 20 (if the recordal of audio is required) and a control manager 40. The video encoder 100 receives signals for encoding either directly from a video capture device 70 of the terminal (e.g. a camera) or indirectly from a store 71. The audio encoder 20 receives signals for coding from a microphone 75 of the terminal 1. If data is to be sent via a circuit-switched network (e.g. a PSTN), then a multiplexer/de-multiplexer 50 and modem will usually be required. When an IP based network is used however, these components are not required.

The control manager 40 controls the operation of the video encoder 100 and the audio encoder 20. However, since the invention is concerned with the operation of the video encoder 100, no further discussion of the audio encoder 20 will be provided.

The video encoder 100 is provided in the surveillance terminal 1 but may also be provided in the end-user terminal 4 if video encoder facilities are required. The video encoder 100 of the video surveillance terminal 1 is similar to a standard video encoder, such as one compliant with MPEG-4 or H.263, but is designed such that the same source picture is continuously used as the input to the video encoder. The effect of this is that the encoder will produce a bit-stream that can be decoded to give a progressively refined representation of that source image.

The video surveillance terminal 1 stores a buffer of uncompressed images of different time periods. The number of stored images is dependant on implementation.

The video encoder of the video surveillance terminal 1 can be instructed at any time by a remote user to change the source image to that of another image. The encoder can then efficiently transmit a representation of the new source image, as any temporal similarities (e.g. background) to the original image will have been coded at a high quality in previous transmissions.

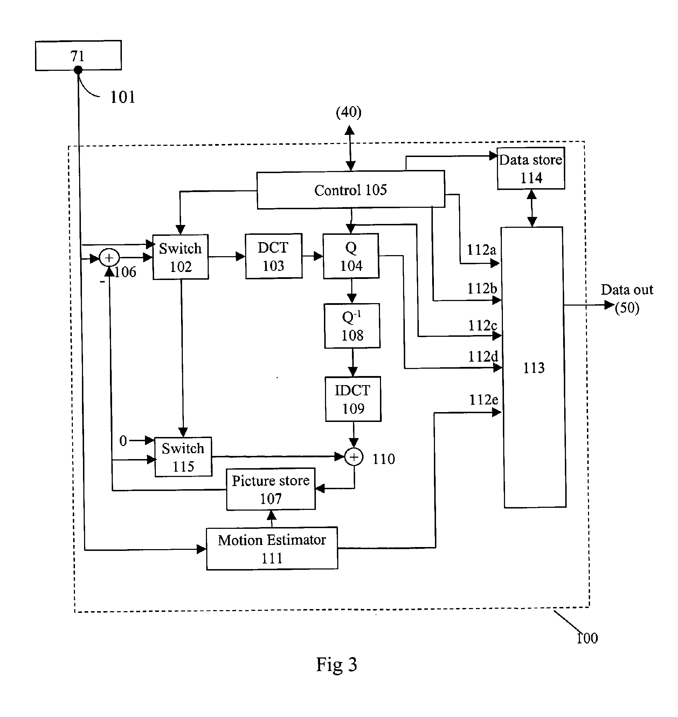

Figure 3 shows an example of a video encoder according to the invention. The video encoder 100 comprises an input 101 for receiving a video signal from a camera 70 or video source 71 of the surveillance terminal 1. A switch 102 switches the encoder between an INTRA-mode of coding and an INTER-mode. The encoder 100 comprises a DCT transformer 103, a quantiser 104, an inverse quantiser 108, an inverse DCT transformer 109, an adder 110, a picture store 107, a subtractor 106 for forming a prediction error, a data formatter 113 and an encoding control manager 105.

The operation of an encoder according to the invention will now be described. The video encoder 100 receives a frame of the video signal captured by the camera 70. The frame presented to the input 101 may be determined by the alarm generator 2 and/or the home security control system 3. When an alarm is activated by the alarm generator 2, the home security control system 3 sends a message to the control manager 40 to identify the point in time for which a video signal is required. In response, a frame is selected from the video store 71 and presented to the video encoder 100 for encoding.

The encoder 100 encodes the video signal by performing DCT transformation, quantisation and motion compensation. The encoded video data is then either output directly on the communications link 9 as packet data or output to the multiplexer 50 if a circuit-switched network is involved. The multiplexer 50 multiplexes the video data from the encoder 100 and control data from the control 40 (as well as other signals as appropriate) into a multimedia signal. The terminal 1 outputs this multimedia signal to the receiving terminal 4 via the modem (if required).

In INTRA-mode, the video signal from the input 101 is transformed to DCT coefficients by a DCT transformer 103. The DCT coefficients are then passed to the quantiser 104 that quantises the coefficients. Both the switch 102 and the quantiser 104 are controlled by the encoding control manager 105 of the video codec, which may also receive feedback control from the receiving terminal 4 by means of the control manager 40. A decoded picture is then formed by passing the data output by the quantiser through the inverse quantiser 108 and applying an inverse DCT transform 109 to the inverse-quantised data. The resulting data is added to the contents of the picture store 107 by the adder 110.

In INTER mode, the switch 102 is operated to accept from the subtractor 106 the difference between the signal from the input 101 and the picture which is stored in the picture store 107. The difference data output from the subtractor 106 represents the prediction error between the current picture input at 101 and the reference picture stored in the picture store 107. A motion estimator 111 may generate motion compensation data from the data in the picture store 107 in a conventional manner although, when the data input to the encoder remains the same, the motion estimator 111 may be disabled to avoid unnecessary computations.

The encoding control manager 105 decides whether to apply INTRA or INTER coding or whether to code the frame at all on the basis of either the output of the subtractor 106 or in response to feedback control data from a receiving decoder. The encoding control manager may decide not to code a received frame at all when the similarity between the current frame and the reference frame is so high or there is not time to code the frame. The encoding control manager operates the switch 102 accordingly.

When not responding to feedback control data, the encoder typically encodes a frame as an INTRA-frame only at the start of coding (all other frames being P-frames), or when the current picture and that stored in the picture store 107 are judged to be too dissimilar. In the present invention, the data input to the encoder remains the same until a message is received by the video surveillance terminal 1 indicating a further frame of data that is required or that no further video data is required. As an example, consider that image 0 is input to the video encoder 100 at time t=T and that a frame of data is encoded every n seconds. The video data output from the encoder is then as follows:

$$I_{0,T} \; P_{0,T+n} \; P_{0,T+2n} \; P_{0,T+3n} \; P_{0,T+4n} \; P_{0,T+5n} \text{ etc.}$$

where

I/P represents if the frame is encoded in an Intra or Inter manner
0 represents the frame number being encoded
T +xn represents the time of coding of the frame by the encoder.
Each P frame is encoded with reference to the immediately previously encoded frame i.e. frame $P_{0, T+4n}$ is encoded in a predictive manner with reference to the previously generated representation of the image i.e. $P_{0, T+3n}$.

Say an end-user requests an image from a point in time 10 seconds after the current image. The control manager 40 receives this request and determines the frame number that equates to this requested point in time, say frame number 100. The control 40 then sends a message to the video store 71 for frame number 100 and this frame is input to the input 101 of the encoder 100. The encoder then proceeds to encode this new frame predictively with respect to the previously encoded frame. Therefore the output from the encoder is as follows:

$$\text{...} \; P_{0,T+5n} \; P_{100,T+6n} \; P_{100,T+7n} \; P_{100,T+8n} \text{ etc.}$$

where $P_{100, T+6n}$ represents frame 100 encoded in an inter manner at time T+6n with reference to frame $P_{0, T+5n}$.

Thus video data is generated for transmission to a subsequent user. A first representation of a first image 0 is generated ($I_{0,T}$). One or more further representations of the first image are then generated ($P_{0,T+n} \; P_{0,T+2n} \; P_{0, T+3n} \; P_{0, T+4n} \; P_{0, T+5n}$ etc), each of the further representations being predicted from a previously generated representation of the first image. In response to a request for a subsequent image, a first representation of a subsequent image at the requested point in time (e.g. T=100) is generated ($P_{100, T+6n}$) by predicting the subsequent image from a representation of the first image, in this case the frame represented by $P_{0, T+5n}$. One or more further representations of the subsequent image ($P_{100,T+7n} \; P_{100,T+8n}$ etc.) are then generated predictively from a previously generated representation (e.g. $P_{100, T+6n}$) of the subsequent image.

The video encoder outputs the quantised DCT coefficients 112a, the quantising index 112b (i.e. the details of the quantising used), an INTRA/INTER flag 112c to indicate the mode of coding performed (I or P), a transmit flag 112d to indicate the number of the frame being coded and the motion vectors 112e for the picture being coded. These are formatted into the correct format by the data formatter 113 and then multiplexed with any other multimedia signals by the multiplexer 50.

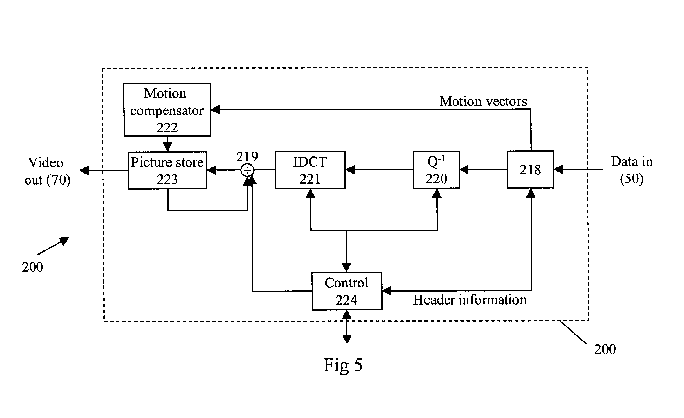

Figure 4 shows the typical multimedia components of the remote end-user terminal 4. The terminal comprises a video decoder 200, an audio decoder 22 and a control manager 40. Again a multiplexer/de-multiplexer 50 and a modem are provided if the terminal is to operate with a circuit-switched network. The terminal 4 receives signals for decoding from a surveillance terminal 1 (via the home security control system 3 and communications link 9). The decoded video is then displayed on a display 76. If audio signals are sent, audio encoder 22 receives the audio signals for decoding from the relevant surveillance terminal 1 and reproduces them via loudspeaker 77.

As shown in Figure 5, the decoder 200 comprises a data de-formatter 218 to split the received video data into its constituent parts, an inverse quantiser 220, an inverse DCT transformer 221, a motion compensator 222, a picture store 223, a switch 219 and a controller 224. The controller 224 receives control signals demultiplexed from the encoded multimedia stream by the demultiplexer 50. In practice the controller 105 of the encoder and the controller 224 of the decoder may be the same processor, if both are provided in the same device.

Considering the terminal 1 as sending coded video data to terminal 4, the operation of the video decoder 200 will now be described. The terminal 4 receives a multimedia signal from the transmitting terminal 1. The demultiplexer 50 demultiplexes the multimedia signal and passes the video data to the video decoder 200 and the control data to the control manager 40. The decoder 200 decodes the encoded video data by de-formatting the video data, inverse quantising, inverse DCT transforming and motion compensating the data. The controller 224 of the decoder checks the integrity of the received data and, if an error is detected, attempts to conceal the error in any suitable manner. The decoded, corrected and concealed video data is then stored in the picture store 223 and output for reproduction on a display 76 of the receiving terminal 4.

As the data input to the transmitting encoder 100 is the same, each received frame of data represents further information relating to the same image. Thus the quality of the image displayed on the display 76 is progressively improved. When an end-user wishes to view a subsequent image, the end-user enters via the user interface 6 an indicator representing the point in time required for the subsequent view. The subsequent image requested may occur temporally before or after the current image being viewed by the end-user.

Thus, when an end-user wishes to view a subsequent, or further, image the remote user terminal 4 sends a message to this effect to the video surveillance terminal 1. The message indicates the time of the required image.

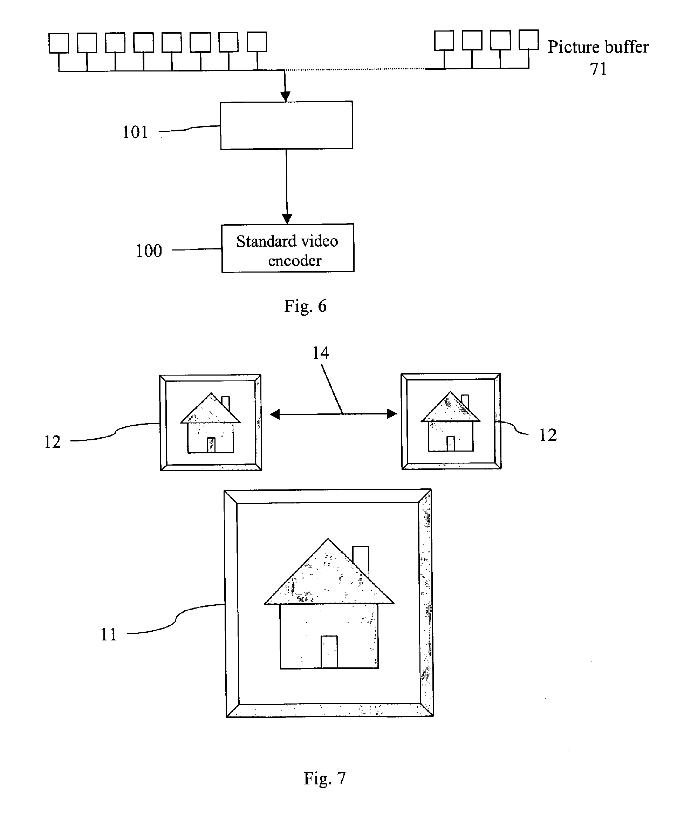

In response to receiving such a message from an end-user terminal 4, the control 40 of the video surveillance terminal 1 sends a message to the video store 71 indicating the time frame required. The video store 71 outputs the corresponding frame of video data to the input of the encoder 100. The input is then encoded in an inter-frame manner with respect to the frame of data stored in the picture store 107. Thus the subtractor 106 generates a signal representing the differences between the frame of data representing the subsequent picture requested and the frame of data representing the previous picture displayed to the end-user. This prediction error signal is then encoded in the normal manner and transmitted to the end-user terminal 4. The encoder then continues to encode the difference between the data representing the subsequent picture as presented to the input of the decoder and the data stored in the picture store 107. This is represented in Figure 6 of the drawings, where the contents of the video store 71 are presented to the input 101 of the encoder 100, one of the frames of data from the sequence of frames being presented until such time as a further frame is requested.

When the data is received by the decoder of the end-user terminal 4, it is decoded in the usual manner for an inter-frame: the received data is de-quantised and inverse transformed and then the reconstructed data added to the contents of the picture store 223. Clearly the contents of the picture store 223 represent the decoded and reconstructed representation of the previous picture viewed by the end-user.

Therefore when the prediction data derived from the subsequent image is decoded by the decoder 200, it is added to the contents of the picture store 223 and the resulting image is displayed on the display 76 of the end-user terminal for consideration by the end-user.

If the end-user determines that the alarm is not a false alarm, steps may then be taken to alert the appropriate security services. If the alarm is a false alarm, a message is sent to the home security control module 3 which resets the alarm generator 2.

If the subsequent image requested differs significantly from the previous image, the prediction data output by the subtractor 106 represents a large prediction error. As is well known in the art, if this prediction error exceeds a predetermined threshold, the control 105 instructs the switch 102 to open and the input frame is encoded in an intra-frame manner. The intra/inter switch 102 may operate either at the frame level or at the macroblock level. Thus macroblocks that are unchanged may be predicted in an inter-frame manner whilst those that are significantly changed may be encoded in an intra-frame manner.

In a further embodiment of the invention, the user is presented with information that allows the user to quickly decide if he wants to view a different source image captured by the video surveillance terminal 1. Thus, a user may be presented with both the current picture 11 and a "thumbnail" representation 12 of one or more of the buffered images captured at the video surveillance system 1, for instance as shown in Figure 7.

The user can then click on a timeline 14, the position along which is decided by his interpretation of which time representation he would like to visualise. The message indicating this time is then sent to the encoder 100. For instance, the user clicks on a timeline 14 at the end-device. This time is sent to the video surveillance terminal 1. This message might be, in C-code:

```
struct new_image_request_type

{unsigned char MESSAGE_ID; /* = UNIQUE IDENTIFIER OF THIS
MESSAGE TYPE

long iTimeDeltaInMs; /* = THE NUMBER OF MILLISECONDS TO
CHANGE THE TIME */};
```

For the example considered earlier, in which a user wished to view a scene that occurred 10 seconds later than the current view, the code would be:

```
new_image_request_type message;

message.MESSAGE_ID = 1;        // some unique identifier

message.iTimeDeltaInMs = 10000;


NetworkSend((char *)&message); // send the message as a byte array over

the network.
```

Thus there has been described a method of encoding video data for transmission, which comprises: inputting a first frame of data representing a first image; encoding the first frame of data to generate an encoded version of the first image; encoding said first frame of data with reference to a previously encoded version of the first frame of data to generate data representing the difference between the first frame of data and the previously encoded version of the first frame of data; in response to a request for a subsequent image, inputting a further frame of video data representing said requested subsequent image; encoding said subsequent frame of data with reference to a previously encoded version of the first frame of data to generate data representing the difference between the further frame of data and the previously encoded version of the first image; and encoding said further frame of data with reference to a previously encoded version of the further frame of data to generate data representing the difference between the further frame of data and the previously encoded version of the first image.

Although the description describes a video encoding/decoding system that is DCT transformed based, the invention is suitable for use with other types of codec. The invention is not intended to be limited to the video coding protocols discussed above: these are intended to be merely exemplary. In particular the invention is applicable to any video coding protocol using temporal prediction.

## Claims

1. A method of generating video data for transmission to a user comprising:

   generating a first representation of a first image,
   generating one or more further representations of the first image, said one or more further representations being predicted from a previously generated representation of the first image,
   in response to a request for a subsequent image, generating a first representation of said subsequent image, said first representation of said subsequent image being predicted from a representation of the first image, and
   generating one or more further representations of said subsequent image, said one or more further representations of said subsequent image being predicted from a previously generated representation of said subsequent image.

2. A method of encoding video data for transmission, comprising:

   encoding a first representation of a first image,
   encoding one or more further representations of the first image, said one or more further representations being predicted from a previously generated representation of the first image,
   in response to a request for a subsequent image, encoding a first representation of said subsequent image, said first representation of said subsequent image being predicted from a representation of the first image, and
   encoding one or more further representations of said subsequent image, said one or more further representations of said subsequent image being predicted from a previously generated representation of said subsequent image.

3. A method according to claim 1 or 2 wherein each further representation of an image is predicted from a previously generated representation which immediately precedes the further representation.

4. A method according to claim 1, 2 or 3 wherein images are stored in a buffer for presentation for encoding on request of a user.

**5.** A method according to any preceding claim wherein the request for a subsequent image represents a pre-determined time before or after the first image.

**6.** A video surveillance system comprising:

a video capture device;
a video encoding device for encoding video signals received from the video capture device;
an alarm generator;
a control device for sending video from the video encoding device to an end user in response to an alarm generated by the alarm generator;
an end-user terminal including a video decoding device for decoding video signals received from the video encoding device and a user interface for a user to input commands to be sent to the video encoding device;
the video encoding device being arranged to encode a first image and to encode one or more further representations of the first image, said one or more further representations being predicted from a previously generated representation of the first image,
in response to a request from an end-user for a subsequent image, to generate a first representation of said subsequent image, said first representation of said subsequent image being predicted from a representation of the first image, and
to generate one or more further representations of said subsequent image, said one or more further representations of said subsequent image being predicted from a previously generated representation of said subsequent image.

**7.** A video surveillance system according to claim 6 further including a buffer for storing images for presentation for encoding on request of a user.

**8.** A video surveillance system according to claim 6 or 7 wherein the request for a subsequent image represents a pre-determined time before or after the first image.

**9.** A video surveillance system according to claim 6, 7 or 8 wherein the control device is located remotely form the video capture device and/or the video encoding device and/or the alarm generator.

**10.** A method of decoding video data, comprising:

receiving a first frame of data representing a first image;
decoding the first frame of data to generate a decoded version of a first image,
decoding further received frames of data with reference to a previously decoded version of the first image,
sending a request to a transmitting encoder identifying a subsequent image of interest to a user,
decoding a frame of data representing said requested subsequent image with reference to a previously decoded version of the first image to generate a representation of the subsequent image from the previously encoded version of the first image, and
decoding further frames of data with reference to a previously decoded version of the subsequent image.

**11.** A method of decoding according to claim 10 further comprising providing a user interface including the presentation of reduced-size views of images occurring before and after the first image, detecting the selection by a user of one of the reduced-size images, said selection by a user corresponding to the request for a subsequent image, and sending a message indicating the selection by the user.

**12.** Video encoding apparatus comprising:

an input for receiving a frame of data to be encoded, a predictive encoder and a control device for controlling the operation of the encoding apparatus,

wherein the predictive encoder is arranged:

to encode a first frame of data representing a first image,
to encode one or more further representations of the first image, said one or more further representations being predicted from a previously generated representation of the first image,
in response to a request for a subsequent image, to encode a first representation of said subsequent image, said first representation of said subsequent image being predicted from a representation of the first image, and to encode one or more further representations of said subsequent image, said one or more further representations of said subsequent image being predicted from a previously generated representation of said subsequent image.

13. Video coding apparatus according to claim 12 wherein the apparatus further includes a motion estimation device and wherein the motion estimation device is disabled when the encoder is encoding further representations of an image.

Fig 1

Fig 2

Fig 4

Fig 3

Fig 5

101

100 — Standard video encoder

Picture buffer
71

Fig. 6

14

12

12

11

Fig. 7

European Patent
Office

# EUROPEAN SEARCH REPORT

Application Number

EP 02 25 0675

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FR 2 811 187 A (TELEDIFFUSION DE FRANCE TDF) 4 January 2002 (2002-01-04)<br>* page 2, line 4 - page 3, line 11 *<br>* page 5, line 1 - page 7, line 3; figures 1,2 *<br>* page 13, line 1 - line 18 * | 1-3,6, 10,12 | H04N7/18<br>G08B13/196 |
| A | GB 2 362 284 A (DEDICATED MICROS LTD) 14 November 2001 (2001-11-14)<br>* abstract *<br>* page 1, line 30 - page 5, line 12 *<br>* page 8, line 18 - page 11, line 23; figure 1 *<br>* page 13, line 1 - page 14, line 28; figures 3,4 * | 1-4,6,7, 9,10,12 | |
| A | FR 2 713 806 A (THOMSON CSF) 16 June 1995 (1995-06-16)<br>* abstract *<br>* page 2, line 5 - page 6, line 7; figure 1 *<br>* page 7, line 19 - page 8, line 17; figure 2 * | 1,2,6, 10,12 | |

TECHNICAL FIELDS
SEARCHED (Int.Cl.7)

H04N
G08B

The present search report has been drawn up for all claims

| Place of search | Date of completion of the search | Examiner |
|---|---|---|
| THE HAGUE | 21 June 2002 | Fuchs, P |

**ANNEX TO THE EUROPEAN SEARCH REPORT
ON EUROPEAN PATENT APPLICATION NO.**                     EP 02 25 0675

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2002

| Patent document cited in search report | | Publication date | Patent family member(s) | | Publication date |
|---|---|---|---|---|---|
| FR 2811187 | A | 04-01-2002 | FR<br>FR | 2811186 A1<br>2811187 A1 | 04-01-2002<br>04-01-2002 |
| GB 2362284 | A | 14-11-2001 | AU<br>WO | 5496401 A<br>0186956 A1 | 20-11-2001<br>15-11-2001 |
| FR 2713806 | A | 16-06-1995 | FR | 2713806 A1 | 16-06-1995 |